# EUROPÄISCHE PATENTSCHRIFT

(11) **EP 3 872 356 B1**
(45) Veröffentlichungstag und Bekanntmachung des Hinweises auf die Patenterteilung: **27.04.2022**
(21) Anmeldenummer: 20159845.5
(22) Anmeldetag: 27.02.2020
(51) Int. Cl.: F16B 12/20

(54) **MÖBELTEILVERBINDUNGSANORDNUNG**
FURNITURE PART CONNECTION ARRANGEMENT
SYSTÈME DE RACCORDEMENT D'UNE PARTIE DE MEUBLE

(43) Veröffentlichungstag der Anmeldung: 01.09.2021
(73) Patentinhaber: Langhorst, Franz-Josef, 59555 Lippstadt (DE)
(72) Erfinder: Langhorst, Franz-Josef, 59555 Lippstadt (DE)
(74) Vertreter: Schober, Mirko

(56) Entgegenhaltungen:
- EP-A1- 2 808 566
- EP-A2- 0 949 424
- DE-A1-102009 043 179
- DE-U1- 20 219 178
- DE-U1-202018 002 961

## Beschreibung

Die Erfindung betrifft eine Möbelteilverbindungsanordnung nach dem Oberbegriff des Anspruchs 1.

DE 20 2018 002 961 U1, DE 10 2009 043 179 A1 und EP 0 949 424 A2 offenbaren Möbelverbindungsanordnungen, bei denen das Verbindungselement in die Öffnungen der zu verbindenden Möbelteile eingeschoben wird. Dabei sind die Verbindungselemente zumindest zweiteilig aufgebaut, wobei die Teile beim Fixieren so gegeneinander verschoben werden, dass sich das Verbindungselement gleichzeitig in den Möbelteilen verklemmt und so die Verbindung fixiert. Nachteil derartiger Möbelverbindungsanordnungen ist, dass die Möbelteile beim Fixieren passgenau voreinander stehen müssen, da bei der gleichzeitigen Fixierung kein finales Zusammenziehen der beiden Möbelteile erfolgen kann.

Bei den aus EP 2 808 566 A1 und DE 202 19 178 U1 bekannten Möbelverbindungsanordnungen sind in der einen Platte, senkrecht zu der zu verbindenden Oberfläche Einbautöpfe eingelassen, in welchen die Verriegelungselemente drehbar gelagert sind. Im anderen Plattenteil ist in einer Bohrung ein Bolzen befestigt, welcher mit seinem Kopf in das Verriegelungselement eingreift und durch Verdrehen des Verriegelungselements fixiert wird. Der Einbautopf mit dem Verriegelungselement weist einen relativ großen Durchmesser auf, so dass durch die notwendige große Bohrung die Platte unnötig geschwächt wird.

Eine gattungsgemäße Möbelverbindungsanordnung ist beispielsweise aus DE 10 2015 219 778 B4 bekannt. Das Prinzip ist in Figur 9 verdeutlicht. Zur Verbindung zweier Möbelteile 10, 30, insbesondere Seitenteile, Oberteile, Unterteile oder Zwischenböden, werden diese miteinander über sogenannte Exzenterbeschläge verbunden. Dazu wird an einem Möbelteil 30 ein Verbindungselement, insbesondere Dübel 2 befestigt, in der Regel eingeschraubt. Dieses Verbindungselement 2 weist an seinem freien Ende einen verbreiterten Kopf auf, ähnlich wie ein Nagelkopf. Am anderen Möbelteil 30 wird ein zylindrisches Einsatzteil 1 in die Schmalseite 12 des Möbelteils 10 eingesetzt, welches das Verbindungselement 2 durch ein axial orientiertes Loch 1a hindurch aufnimmt. In das Einsatzteil 1 ist ein Fixierelement3, insbesondere ein Exzenter, eingesetzt.

In der Endlage des Einsatzteils 1, welches in einer Aussparung 13 im Möbelteil 10 eingesetzt ist, ist das Fixierelement 2 von außen praktisch nicht mehr sichtbar und kann mit einem Werkzeug über das Loch 14 erreicht werden. In dieser Lage wird das zweite Möbelteil 30 mit seinem Verbindungselement 2 am ersten Möbelteil 10 angebracht, indem das Verbindungselement 2 in die Bohrung 13 in Einschubrichtung X eingeschoben wird bis der Anschlag erreicht ist, d.h. je eine Fläche des ersten und des zweiten Möbelteils aneinander liegen. In der Anschlagstellung wird das Fixerelement 2 durch das Loch 14 mittels eines Werkzeugs aus der Nichteingriffslage in die Eingriffslage verdreht und fasst in letzterer Lage das Verbindungselement des zweiten Möbelteils 30.

Der Vorteil dieser Lösung ist, dass das Fixierelement im zweiten Möbelteil versteckt wird, wobei dieses nur noch durch eine im Vergleich zum Durchmesser des Fixierelements wesentlich schmalere Bohrung mittels eines Werkzeugs, beispielsweise mittels eines Schraubendrehers, zugänglich ist.

Die Funktonalität der geschilderten Möbelteilverbindungsanordnung lässt im Grunde genommen nicht viel zu wünschen übrig. Allerdings muss das Einsatzteil im entsprechenden Möbelteil verankert werden, um eine dauerhaft feste Möbelteilverbindungsanordnung zu schaffen. Nach dem Stand der Technik kann dies beispielsweise durch einen Formschluss bzw. auch einen Stofffluss erreicht werden, indem zum Beispiel das Einsatzteil mit dem Möbelteil verklebt wird. Ein Nachteil dieser Lösung ist allerdings, dass eine entsprechende Drehausrichtung des Einsatzteils nur für eine begrenzte Zeit möglich ist, da der Klebstoff natürlich beginnt auszuhärten.

Der vorliegenden Erfindung liegt daher die Aufgabe zugrunde, eine Möbelteilverbindungsanordnung der eingangs genannten Art zu schaffen, bei welcher zumindest ein stoffflüssiges Verbinden des Einsatzteils mit dem zugehörigen Möbelteil nicht mehr erforderlich ist.

Gelöst wird diese Aufgabe durch eine Möbelteilverbindungsanordnung mit den Merkmalen des Anspruchs 1. Vorteilhafte Ausführungsformen finden sich in den Unteransprüchen.

Die erfindungsgemäße Möbelteilverbindungsanordnung mit einem ersten Möbelteil und einem damit verbundenen zweiten Möbelteil weist ein am zweiten Möbelteil befestigtes Verbindungselement auf, welches in ein in einer ersten Seite des ersten Möbelteils vorgesehenes Loch in einer Einschubrichtung eingeschoben und darin mittels eines im ersten Möbelteil vorgesehenen Fixierelements gesichert ist. In der ersten Seite des ersten Möbelteils, wobei es sich bevorzugt um die Schmalseite einer Möbelplatte handeln kann, ist dabei eine Aufnahme zur Aufnahme eines Einsatzteils vorgesehen, in welche das Einsatzteil eingebracht ist. Das Einsatzteil weist das Loch auf und nimmt das Fixierelement darin auf. Um einen Halt des Einsatzteils im zugehörigen Möbelteil sicherzustellen, ist das Einsatzteil so ausgebildet, dass es beim Einschieben des Verbindungselements in das Loch und/oder beim Fixieren des Verbindungselements mit dem Fixierelement radial ausgedehnt oder gespreizt wird. Alternativ kann auch wenigstens ein, insbesondere als Lasche ausgebildeter, Abschnitt des Einsatzteils aus diesem ausgestellt werden.

Der Grundgedanke der Erfindung ist also, dass durch das Wölben, Spreizen oder Ausstellen wenigstens eines Abschnitts das Einsatzteil ohne weitere stoffschlüssige Hilfsmittel beim Verbinden der beiden Möbelteile kraft- und formschlüssig an der Innenwand der Aufnahme fixiert wird.

Erfindungsgemäß ist vorgesehen, dass das Einsatzteil einen Schlitz umfasst und das Loch sich in Einschubrichtung verjüngt, wobei die Verjüngung bevorzugt konisch ausgebildet ist. Außerdem umfasst das Verbindungselement einen Spreizabschnitt, der sich bevorzugt entgegen der Einschubrichtung, insbesondere konisch, verjüngt. Letzterer spreizt beim Einbringen des Verbindungselements in das Loch das Einsatzteil im Bereich des Schlitzes. Dadurch werden die durch den Schlitz getrennten Abschnitte des Einsatzteils, insbesondere radial, auseinander gedrückt, so dass sich der Schlitz weitet und die durch den Schlitz getrennten Abschnitte gegen die Innenwand der Aufnahme gepresst werden. So wird die kraftschlüssige Verbindung hergestellt. Erfindungsgemäß ist vorgesehen, dass das Einsatzteil vollständig in die Aufnahme eingebracht und bündig mit der ersten Seite angeordnet ist.

Nach einer besonderen Ausführungsform der vorliegenden Erfindung ist vorgesehen, dass das Verbindungselement einen sich in Einschubrichtung, insbesondere konisch, verjüngenden Spreizabschnitt umfasst. Letzterer spreizt beim Einbringen des Verbindungselements in das Loch das Einsatzteil im Bereich des Schlitzes. Dadurch werden, wie bereits oben beschrieben, die durch den Schlitz getrennten Abschnitte des Einsatzteils, insbesondere radial, auseinander gedrückt, so dass sich der Schlitz weitet und die durch den Schlitz getrennten Abschnitte gegen die Innenwand der Aufnahme gepresst werden. Durch einen in Einschubrichtung sich verjüngenden Spreizabschnitt, werden die Spreizkräfte mehr auf die Oberfläche des Spreizabschnitts verteilt und so die Reibungskräfte punktuell verringert, was zu geringerem Abrieb führt.

Nach einer besonderen Ausführungsform endet der Schlitz wenigstens an einem Ende in einen gegenüber dem Schlitz verbreiterten Materialschwächungsabschnitt oder/und verläuft der Schlitz im Wesentlichen in einem Teilabschnitt des Einsatzteils, wobei der Schlitz an wenigstens einem Ende in einem radial zur Einschubrichtung gegenüber dem Teilabschnitt verjüngten Abschnitt endet. Die verbreiterten Materialschwächungsabschnitte, wie auch die verjüngten Abschnitte dienen dazu, die durch die Spreizung hervorgerufenen Kräfte, die auf das Einsatzteil wirken, abzufangen, sie also nicht an andere Abschnitte des Einsatzteils weiterzuleiten, so dass die Spreizkräfte ganz besonders an den Kontaktstellen von Spreizabschnitt und Einsatzteil wirken, ohne dass größere Anteile der Spreizkräfte über die anderen Abschnitte des Einsatzteils verteilt werden.

Für das Einsatzteil und die Aufnahme sind verschiedene Geometrien denkbar. Das Einsatzteil kann z. B. quaderförmig oder prismenförmig sein, wobei die Aufnahme entsprechend ausgelegt ist, um das Einsatzteil aufzunehmen. Bevorzugt kann vorgesehen sein, dass die Aufnahme einen kreiszylindrischen Querschnitt aufweist und das Einsatzteil eine kreiszylindrische Hüllfläche aufweist, so dass es in der Aufnahme drehbar ist.

So bleibt Spiel vorhanden, um fertigungsbedingte Intoleranzen noch ausgleichen zu können.

Im Hinblick auf geringe Produktionskosten und Massenfertigung entsprechender Verbindungsbeschläge ist bevorzugt vorgesehen, dass das Einsatzteil im Wesentlichen aus einem Kunststoff gebildet ist. Auf diese Weise ist eine Massenfertigung, z.B. als Spritzgussteil, zu geringen Kosten möglich und die Erfindung verteuert die Produktion entsprechend ausgestatteter Möbelteile nicht.

Bevorzugt ist das Fixierelement ein um eine Achse senkrecht zur Einschubrichtung drehbares Fixierelement. Dadurch können bekannte Exzenter auch im Rahmen der Erfindung verwendet werden. Das Verbindungselement ist bevorzugt ein stift- oder bolzenartiges Element, dessen dem ersten Möbelteil zugewandtes Ende einen verbreiterten Kopfabschnitt aufweist, der einen Abschnitt des Fixierelements hintergreift.

Vorteilhafterweise ist vorgesehen, dass das Fixierelement als Exzenter und das Verbindungselement als Einschraubdübel eines Exzenterbeschlages ausgebildet sind. Zur Verwendung bekannter Exzenterbeschläge ist bevorzugt vorgesehen, dass das erste Möbelteil eine an die erste Seite angrenzende zweite Seite aufweist, in der wenigstens ein Zugangsloch vorgesehen ist. Dieses ist so angeordnet, dass das Fixierelement durch das Zugangsloch hindurch betätigt werden kann. Dies kann zum Beispiel mit einem Schraubendreher oder Imbusschlüssel geschehen. Dazu kann das Fixierelement beispielsweise zum Fixieren eine Werkzeugaufnahme mit Kreuzschlitz- oder Innensechskantform aufweisen.

Das Zugangsloch ist bevorzugt eine Bohrung, deren Axialrichtung senkrecht zur Einschubrichtung liegt. Die Bohrung kann im Durchmesser klein ausfallen, es genügt, wenn ein oben beschriebenes Werkzeug hindurch passt. Folglich fällt eine solche Bohrung kaum auf und ist insbesondere von dem auf der Korpusinnenseite von Möbelseitenwangen ohnehin vorhandenen Bohrbild für die Aufnahme von Zwischenböden faktisch nicht zu unterscheiden. Die Bohrung kann in der Flächenseite aber auch alternativ oder ergänzend in einer an die erste Seite angrenzenden Schmalseite vorgesehen sein. Dadurch, dass das Einsatzteil in der Aufnahme erfindungsgemäß drehbar ist, kann es so gedreht werden, dass das Fixierelement auch von der Schmalseite des Möbelteils aus zugänglich ist. Dies hat den Vorteil, dass sich die Schmalseite des Möbelteils anschließend durch eine Seitenwange oder Rückwand abdecken lässt oder die Schmalseite zur Stellwand hin weist, so dass die Zugangsbohrung von außen gar nicht mehr sichtbar ist.

Nach einer weiteren bevorzugten Ausführungsform der erfindungsgemäßen Möbelteilverbindungsanordnung kann vorgesehen sein, dass der Exzenter eine im Querschnitt nicht kreisrunde Hüllfläche aufweist, so dass er beim Drehen eine radial nach außen gerichtete Kraft auf das Einsatzteil ausübt. Die Vertiefung im Einsatzteil, in der der Exzenter untergebracht ist, wird durch Druck des Exzenters beim Drehen verformt, wobei wenigstens ein Abschnitt der Außenfläche des Exzenters gegen die Innenwand der den Exzenter aufnehmenden Vertiefung drückt. Bevorzugt ist die Form des Exzenters so gewählt, dass die Innenwand der Vertiefung bei deren Verformung die Außenwand des Einsatzteils gegen die Innenwand der Aufnahme im zugehörigen Möbelteil presst.

Eine alternative Ausführungsform der Möbelteilverbindungsanordnung sieht vor, dass das Einsatzteil eine Aufnahmevertiefung, mit insbesondere kreisförmigem Querschnitt, aufweist, in welche das Fixierelement eingesetzt ist, wobei die Aufnahmevertiefung eine Innenwand aufweist, an welcher wenigstens ein Vorsprung so angeordnet ist, dass dieser beim Drehen des Fixierelements von diesem überfahren und, insbesondere radial, nach außen verdrängt wird. Dabei kann man sich die spezielle Form des als Fixierelement in Frage kommenden Exzenters zu Nutze machen, der über einen klauenartigen Fixierabschnitt verfügt, welcher den verbreiterten Kopf des am anderen Möbelteil befindlichen Verbindungselements umgreift.

Nach einer vorteilhaften Ausführungsform ist insbesondere vorgesehen, dass das Loch einen nicht kreisförmigen, insbesondere sechseckförmigen, Querschnitt aufweist. Auf diese Weise ist es möglich, mittels eines Werkzeuges wie z.B. einem Sechskantschlüssel, die Drehlage des Einsatzteils in der Aufnahme noch anzupassen und das Einsatzteil auch wieder aus der Aufnahme herauszudrehen.

Zur Erkennung der Drehposition des Einsatzteils von außen kann insbesondere noch vorgesehen sein, dass es an seiner nach Einschieben in die Aufnahme nach außen weisenden Stirnseite eine Drehlagenmarkierung, insbesondere eine schlitzartige Vertiefung aufweist.

Vorteilhaft ist auch, dass das Einsatzteil an seiner Außenseite wenigstens eine sich zumindest mit einer Richtungskomponente in Umfangsrichtung des Einsatzteils erstreckende Rippe aufweist. Bevorzugt sind am Einsatzteil eine Mehrzahl über seine Längserstreckung beabstandete kreisbogenförmige Rippen vorgesehen. Dadurch kann ein sicherer Kraft- und/oder Formschluss des Einsatzteils mit der Aufnahme erzielt werden. Bevorzugt ist dabei vorgesehen, dass die Rippen in Einschubrichtung schräg verlaufende Flanken aufweisen. Dies erleichtert das Einschieben oder Einschlagen des Einsatzteils in die Aufnahme.

Die Rippe oder die Rippen können auch als Schraubenlinie ausgebildet sein. Eine solche durch Rippen gebildete Schraubenlinie windet sich um die parallel zur Einschubrichtung des Einsatzteils verlaufende Längsachse desselben. Die Schraubenlinie kann durchgängig oder in ihrem Verlauf unterbrochen sein. Auf diese Weise ist bei Drehen des Einsatzteils in der Aufnahme eine gewisse Zwangsführung gegeben, wodurch dieses sich noch leichter aus der Aufnahme herausdrehen lässt.

Die Erfindung wird nachfolgend anhand der Zeichnungen in den Figuren 1 bis 9 näher erläutert.
Figur 1 zeigt eine erste Ausführungsform der erfindungsgemäßen Möbelteilverbindungsanordnung im unverbundenen Zustand.
Figur 2 zeigt die erste Ausführungsform im verbundenen Zustand.
Figur 3A zeigt eine nicht zur Erfindung gehörige Ausführungsform der Möbelteilverbindungsanordnung im unverbundenen Zustand.
Figur 3B zeigt die Ausführungsform der Figur 3A im verbundenen Zustand.
Figur 4A zeigt eine Variante der nicht zur Erfindung gehörigen Ausführungsform der Möbelteilverbindungsanordnung im unverbundenen Zustand in seitlicher Ansicht.
Figur 4B zeigt eine Draufsicht auf das in Figur 4A abgebildete Einsatzteil und eine Querschnittansicht des Einsatzteils.
Figur 4C zeigt die Ausführungsform aus Fig. 4A im verbundenen Zustand.
Figur 5 zeigt eine zweite nicht zur Erfindung gehörige Ausführungsform der Möbelteilverbindungsanordnung im unverbundenen Zustand.
Figur 6 zeigt die zweite nicht zur Erfindung gehörige Ausführungsform im verbundenen Zustand.
Figur 7 zeigt eine zweite Ausführungsform der erfindungsgemäßen Möbelteilverbindungsanordnung im unverbundenen Zustand.
Figur 8 zeigt eine dritte Ausführungsform der erfindungsgemäßen Möbelteilverbindungsanordnung im unverbundenen Zustand.
Figur 9 zeigt eine perspektivische Prinzipdarstellung einer Möbelteilverbindungsanordnung, für welche Ausführungen nach dem Stand der Technik als auch die in den Figuren 1, 2, 7 und 8 dargestellten Ausführungsformen eingesetzt werden können.

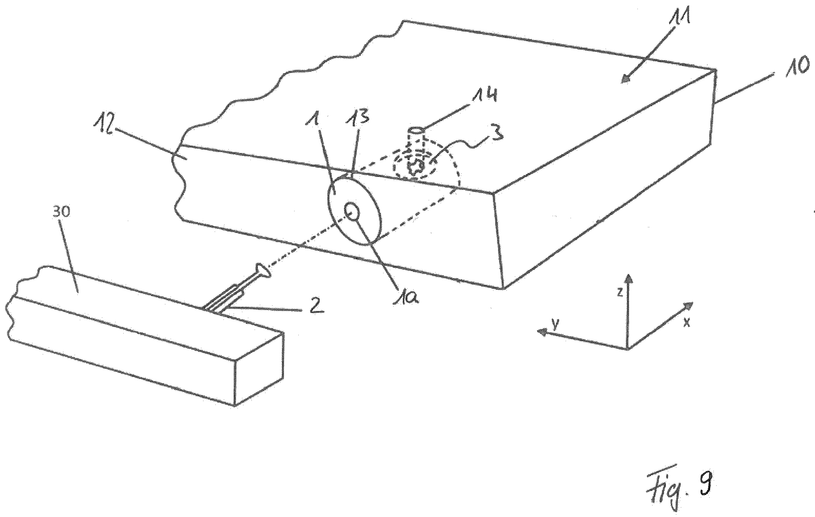

Die in Figur 9 dargestellte Möbelverbindungsanordnung weist ein erstes Möbelteil 10 auf, welches eine Platte aus Holzoder Holzersatzstoffen sein kann. Das erste Möbelteil 10 weist eine erste Seite 12 auf, bei der es sich wie im gezeigten Beispiel um die Schmalseite der Platte handeln kann. Angrenzend an die erste Seite 12 befindet sich rechtwinklig zur Schmalfläche eine zweite Seite 11 mit einer entsprechenden Fläche. Die Haupterstreckungsrichtung des ersten Möbelteils sei hier mit X und Y, die Höhenrichtung mit Z bezeichnet. Weiter befindet sich in der ersten Seite 12 eine Aufnahme 13, die durch Bohren oder Fräsen in die Seite 12 eingebracht werden kann. Diese Aufnahme 13 dient zum Einschieben eines Einsatzteils 1 in Einschubrichtung X und zum Aufnehmen desselben.

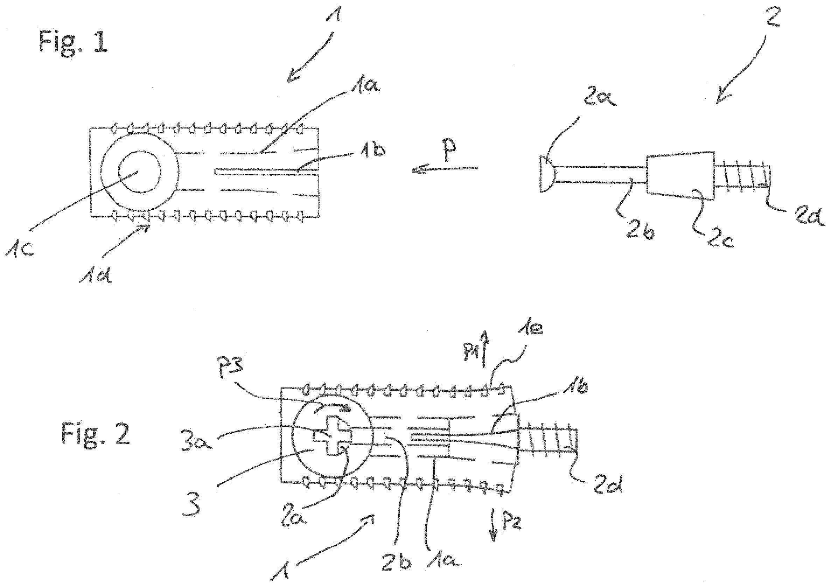

Das Einsatzteil 1 ist bevorzugt im Wesentlichen zylindrisch dargestellt, da dies im Bezug auf die Einbringung der Aufnahme 13 in die Seite 12 eine praktikabelste Form ist. Zylindrisch kann einerseits streng rotationssymmetrisch bedeuten, andererseits genügt es, wenn es sich in einer als Kreisbohrung vorgesehenen Aufnahme 11 kraft- und/oder formschlüssig fixieren und in der Aufnahme um die Längsachse drehen lässt. Weiter kann das Einsatzteil 1 ein Gewinde aufweisen, um es in die Aufnahme 13 einzuschrauben. Dieses Gewinde kann auch durch Rippen 1d (vgl. Figuren 1 bis 8) gebildet werden, die in Form einer ggf. auch im Verlauf unterbrochenen Spirallinie um die Längsachse des Einsatzteils herum gewunden sind. Die Rippen 1d können aber alternativ oder ergänzend auch kreisbogenförmig an der Außenkontur des Einsatzteils 1 ausgebildet sein und lediglich eine Richtungskomponente in Umfangsrichtung des Einsatzteils 1 aufweisen. In den gezeigten Beispielen der Figuren 1 bis 8 sind die Rippen 1d an ihrer in Einschubrichtung vorauslaufenden Flanke angeschrägt, um den Einschubvorgang zu erleichtern und ein Abbrechen zu vermeiden.

Das Einsatzteil 1 weist eine erste Bohrung 1a (eine Bohrung meint im Sinne dieser Anmeldung allgemein eine Aussparung, die nicht zwingend durch Bohren eingebracht werden muss, sondern z.B. auch im Wege eines Spritzgussverfahrens ausgebildet wird) mit Achsrichtung in Einschubrichtung X auf. Die Bohrung 1a kann eine Kreisbohrung sein, sie kann aber auch eine von der Kreisgeometrie abweichenden Querschnitt aufweisen, insbesondere einen, der zur Aufnahme eines Werkzeugs wie z.B. einem Sechskantschlüssel geeignet ist. Weiter ist in die Mantelfläche des Einsatzteils 1 eine zweite Bohrung oder Fräsung oder Vertiefung 1c (vgl. Fig. 1, 3A, 4A, 5, 7, 8) eingebracht, deren Achsrichtung senkrecht zur Achsrichtung der Bohrung 1a liegt und in die ein Fixierelement 3 eingesetzt ist, welches bevorzugt ein Exzenter eines Exzenterbeschlages ist. Dieser lässt sich durch ein Werkzeug um die Achse der Bohrung oder Fräsung 1c drehen. Dazu kann das Einsatzteil 1 in der Aufnahme 13 in die richtige Drehlage gedreht werden. Bevorzugt ist hierzu eine Markierung, z.B. in Form eines Schlitzes in dem Einsatzteil 1 in der außen liegenden Stirnseite vorgesehen, um von außen sehen zu können, wann die korrekte Drehlage erreicht ist. Die Bohrung oder Aussparung 1a reicht in Richtung der anderen Stirnseite des Einsatzteils 1, wenigstens bis in den Griffbereich der Exzenterklauen des Fixierelements 3, um ein in die Bohrung 1a eingebrachtes Verbindungselement 2 damit fixieren zu können.

Die Fixierung des Einsatzteils 1 am zugehörigen Möbelteil 10 kann auf unterschiedliche Weise erfolgen. In Figur 9 ist das Prinzip der Verbindung zu sehen (welches auch eingangs erläutert wurde), das dortige Einsatzteil 1 sowie das dort gezeigte Verbindungselement 2, welches am anderen Möbelteil 30 befestigt ist, werden nun anhand der in den Figuren 1 bis 8 gezeigten Beispielen näher erläutert.

Figur 1 zeigt eine Seitenansicht eines Einsatzteils 1 sowie eine Seitenansicht des entsprechenden Verbindungselements 2. In den gezeigten Beispielen sind an der Außenseite des Einsatzteils 1 Rippen 1d angedeutet, diese können zur Verbesserung eines Kraftschlusses zwischen der Innenwand der bevorzugt an der Schmalseite 12 des Möbelteils 10 eingebrachten Aufnahme 13 des Möbelteils 10 und dem Einsatzteil 1 vorhanden sein, müssen aber nicht vorgesehen sein.

Bei dem in den Figuren 1 und 2 gezeigten Ausführungsbeispielen funktioniert die Fixierung wie folgt: Das Einsatzteil 1 weist einen in Einschubrichtung ausgebildeten Längsschlitz 1b auf. Das Verbindungselement 2 weist an seinem einen Ende einen Befestigungsabschnitt 2d auf, mit dem es an dem zugehörigen Möbelteil (30, vergleiche Figur 9) befestigt ist. Am gegenüberliegenden Ende befindet sich ein verbreiterter Kopf 2a, welcher von dem im Einsatzteil 1 vorgesehenen Fixierelement 3 beim Fixieren erfasst und hintergriffen wird. Der zwischen den beiden Enden des Verbindungselements 2 befindliche Abschnitt 2b ist zumindest abschnittsweise verbreitert, insbesondere ist ein sich in Einschubrichtung (Pfeil P) verjüngender Abschnitt 2c vorgesehen. Wird das Verbindungselement 2 in Pfeilrichtung P in das Einsatzteil 1 in die dortige Aussparung 1a eingeschoben, so stößt der sich verjüngende Abschnitt 2c mit der Innenwand des Lochs 1a zusammen und weitet dieses aufgrund der konischen Form 2c auf. Aufgrund des Schlitzes 1b wird das Loch 1a im Bereich des Schlitzes 1b aufgeweitet, sodass sich die entsprechenden Außenseiten 1e des Einsatzteils 1 in den Richtungen P1 und P2 vom Verbindungselement 2 Weg nach außen spreizen. Da sich das Einsatzteil 1 zu diesem Zeitpunkt in einer entsprechenden Aufnahme 13 (vergleiche Figur 9) eines Möbelteils 10 befindet, werden die Abschnitte 1e gegen die Innenwand dieser Aufnahme 13 gedrückt und fixieren das Einsatzteil 1 darin. Durch Fixieren des Fixierelements 3 am Verbindungselement 2, beispielsweise durch Drehen des Exzenters 3 in Richtung des Pfeils P3, wird das Verbindungselement 2 im Einsatzteil 1 fixiert.

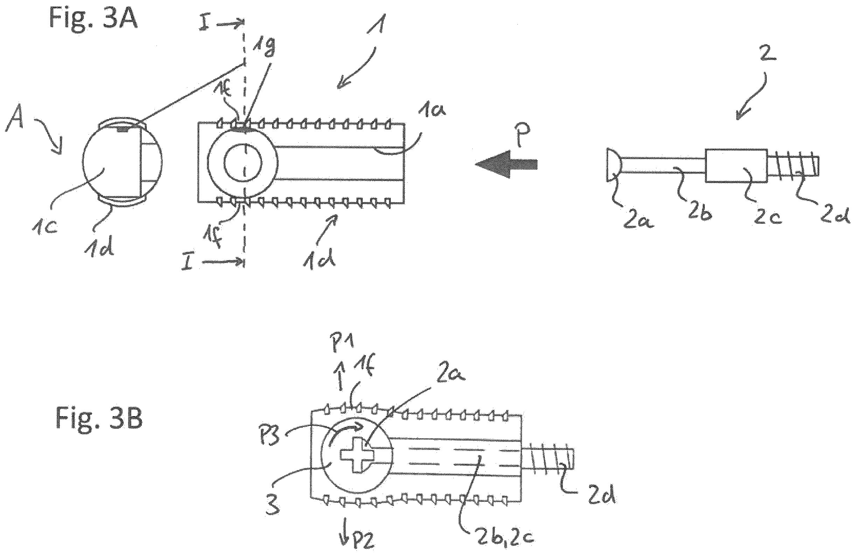

Letzteres geschieht auch bei den in den Figuren 3A, 3B, 4A, 4B, 4C bzw. 5, 6, 7 und 8 gezeigten Beispielen. Unterschiedlich ist hier jedoch die Weise, auf welche das Einsatzteil 1 in Richtung der Innenwand der Aufnahme 13 gespreizt bzw. verformt wird. In beiden nachfolgenden Beispielen erfolgt eine Verformung bzw. Spreizung des Einsatzteils 1 in den Bereichen 1f, also im Bereich des Fixierelements 3.

Bei dem in den Figuren 3A und 3B gezeigten nicht erfindungsgemäßen Beispiel ist auf der Innenseite der Aufnahme oder Vertiefung 1c, die für die Aufnahme des Fixierelements 3 vorgesehen ist, in der dortigen Innenwand wenigstens ein Vorsprung 1g vorgesehen. Das Detail A zeigt einen Querschnitt durch das Einsatzteil entlang der Schnittlinie I-I. Überfährt beim Fixiervorgang das Fixierelement 3 diesen Bereich 1g, so weicht der Abschnitt des Einsatzteils 1 an dieser Stelle 1f nach außen aus (Pfeil P1 bzw. P2) und es erfolgt eine Wölbung, wie diese in Figur 3B dargestellt ist. Durch die Ausweitung des Einsatzteils 1 in diesem Bereich erfolgt wiederum eine kraftschlüssige Anlage des Einsatzteils 1 an die Innenwand der Aufnahme 13 (vergleiche Figur 9), sodass das Einsatzteil 1 am entsprechenden Möbelteil 10 festgehalten wird.

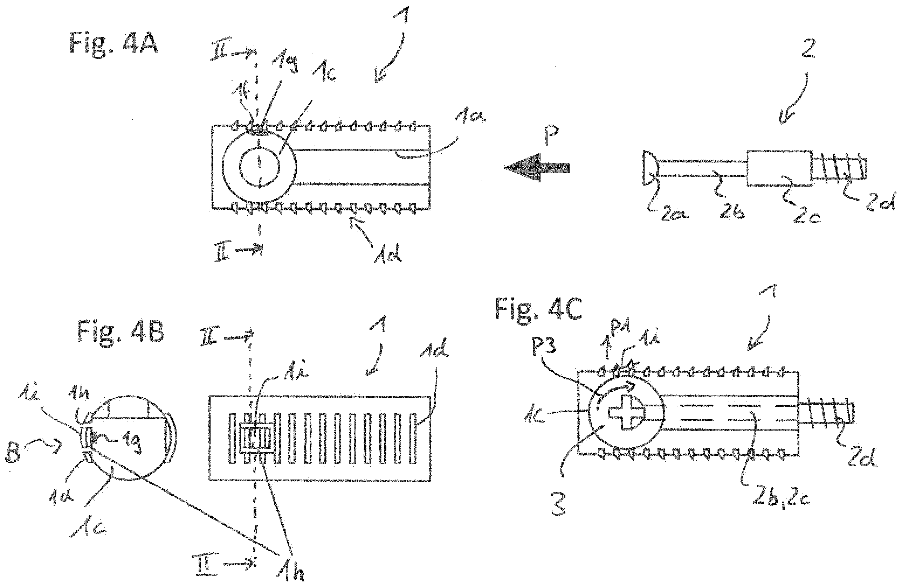

In der in den Figuren 4A bis 4C gezeigten Variante zum Stand der Technik wird in dem Einsatzteil 1 keine Wölbung erzeugt, sondern eine in der Wand des Einsatzteils 1 ausgebildete Lasche 1i ausgestellt, wenn das Fixierelement 3 in Richtung des Pfeils P3 gedreht wird. An der Innenseite der Lasche 1i ist ähnlich wie im zuvor beschriebenen Ausführungsbeispiel ein entsprechender Vorsprung 1g angebracht, welcher beim Drehen des Fixierelements 3 durch das Fixierelement 3 nach außen verdrängt wird. Das Detail B in Figur 4B zeigt einen Querschnitt durch das Einsatzteil entlang der Schnittlinie II-II. In dieser Detailansicht sind die Lasche 1i und der daran befindliche Vorsprung 1g besonders gut zu sehen. Die Lasche 1i ist dadurch ausgebildet, dass ein Teil der Oberfläche des Einsatzteils 1 entlang einer in etwa U-förmigen Linie 1h ausgeschnitten ist. Ausgeschnitten bedeutet, dass an dieser Stelle Material fehlt. Wird also der Vorsprung 1g durch Drehen des insbesondere als Exzenter ausgebildeten Fixierelements 3 radial verdrängt, wird die Lasche 1i dadurch in Richtung des Pfeils P1 im Bereich 1f des Einsatzteils 1 angehoben und seitlich aus der Außenwand des Einsatzteils 1 ausgestellt. Dadurch drückt dieser Abschnitt 1i gegen die Innenwand der Aufnahme 13, in die das Einsatzteil 1 eingesetzt ist.

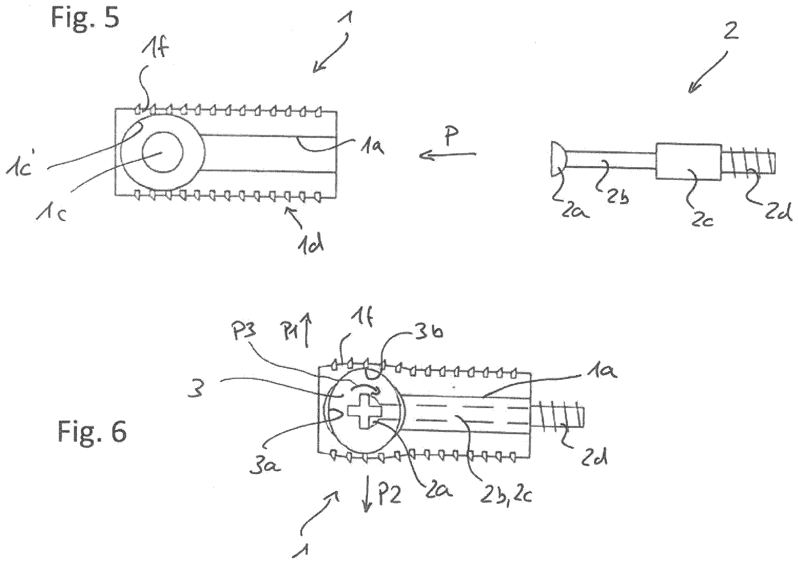

Auf ähnliche Weise wird auch bei dem in den Figuren 5 und 6 gezeigten Beispiel zum Stand der Technik im Bereich des Exzenters 3 das Einsatzteil 1 im Bereich der Außenwand 1f nach außen gespreizt oder verformt. Hier geschieht dies dadurch, dass der Exzenter 3 eine nicht kreisrunde Form (hier ovale Form) aufweist, sodass dessen Verdrehung in Richtung des Pfeils P3 die Innenwand 1c' der Aufnahme 1c nach außen verdrängt. Die Formgebung für den Exzenter 3 sowie die Aussparung 1c können beliebig sein. Im gezeigten Beispiel sind die Aussparung 1c und der Exzenter 3 jedenfalls nicht kreisrund, bevorzugt oval, ausgebildet. Im vorliegenden Fall liegt der breitere Durchmesser der Aussparung 1c etwa parallel zur Einschubrichtung P und der schmalere Durchmesser etwa senkrecht dazu. Dies hat zur Folge, dass der Exzenter 3 in der Öffnungsstellung formschlüssig und passgenau in der Aussparung 1C liegt, in der Verriegelungs-stellung (Figur 6) liegt die Achse mit dem größeren Durchmesser des Exzenters 3 etwa senkrecht zur Achse mit dem größeren Durchmesser der Aussparung 1c. Dadurch drückt die Außenseite des Exzenters 3 im Bereich 3b des Exzenters 3 in dieser Position gegen die Innenwand der Aussparung 1c und verdrängt diese in Richtung des Pfeils P1, wodurch eine Wölbung 1f in der Außenwand des Einsatzteils 1 entsteht. Der in der Flucht der Bohrung 1a befindliche Abschnitt 3a des Exzenters 3 weist im gezeigten Beispiel keinen Kontakt zu Innenwand der Aussparung 1c auf.

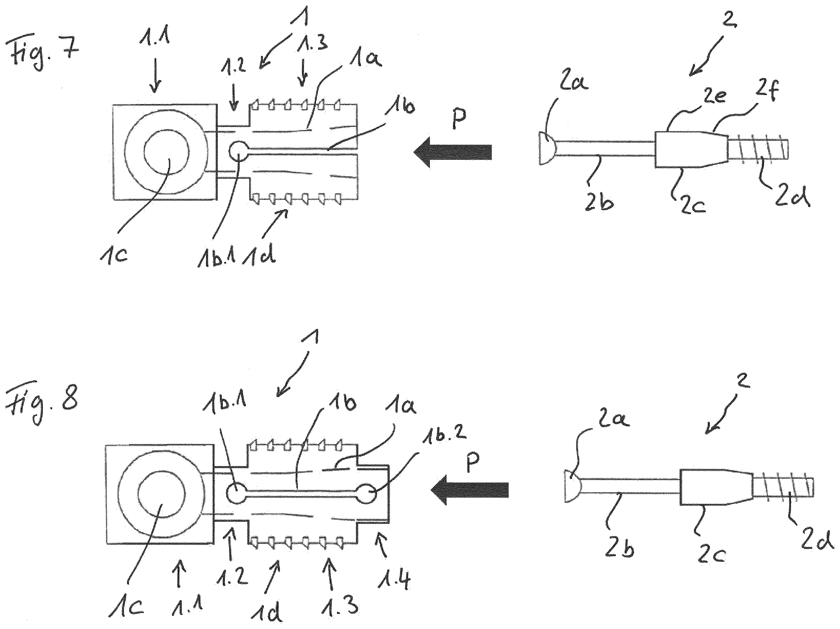

Eine weitere Ausführungsform des erfindungsgemäßen Gegenstands zeigt die Figur 7, bei der das Einsatzteil 1 in Einschubrichtung P betrachtet stärker gegliedert ist. Ein bspw. aus den Figuren 1 und 2 bekannter Fixierelementträgerabschnitt 1.1 ist über einem verjüngten Abschnitt 1.2 mit dem Teilabschnitt 1.3 verbunden. In dem Teilabschnitt 1.3 ist ein sich in Einschubrichtung P verjüngendes Loch 1a angeordnet, in das das Verbindungselement 2 eingeschoben wird/werden kann. Zusätzlich ist in dem Teilabschnitt 1.3 parallel zur Achse der Bohrung 1a mindestens ein Schlitz 1b angeordnet, der in Einschubrichtung P betrachtet in einem Materialschwächungsabschnitt 1b.1 endet. Dieser Materialschwächungsabschnitt 1b.1 befindet sich im Bereich des verjüngten Abschnitts 1.2. Zu dem feien Ende des Teilabschnitts 1.3 hin ist der mindestens eine Schlitz 1b offen, wodurch er gleichzeitig als Orientierungshilfe bei der Ausrichtung des Einsatzteils 1 in der Aufnahme 13 dienen kann. Weiterhin sind an der Außenfläche des Teilabschnitts 1.3 Halteelemente, hier gezeigt Rippen 1d, angeordnet, die dazu dienen, eine mögliche Verbindung zwischen dem Einsatzteil 1 und der Aufnahme 13 eines ersten Möbelteils 10 zu verstärken. Das dazugehörige Verbindungselement 2 entspricht im Wesentlichen dem der vorhergehenden Ausführungsformen, außer dass der Spreizabschnitt 2c in Einschubrichtung P betrachtet im vorderen Bereich 2e zylindrisch ausgeführt ist und im hinteren Bereich 2f sich konisch verjüngt.

Wird nun das Verbindungselement 2 in das Loch 1a des Einsatzteil 1 eingeschoben, so berührt die vordere Kante des Spreizabschnitts 2c die Innenwand des Lochs 1a und drückt die Innenwand nach außen. Durch den mindestens einen Schlitz 1b des Einsatzteils 1 kann die Wandung des Teilabschnitts 1.3 nach außen ausweichen und gegen die Wandung der Aufnahme 13 drücken. Dabei dient der verjüngte Abschnitt 1.2 quasi als Gelenk, da durch die Verjüngung eine Materialschwächung erfolgt, so dass die Kräfte, mit der der Spreizabschnitt 2c des Verbindungselements 2 auf die Innenwand des Einschubteils 1 drückt, nicht auf den Fixierelementträgerabschnitt 1.1 übertragen werden. Unterstützt wird dieses Nicht-Weiterleiten der Kräfte durch den Materialschwächungsabschnitt 1b.1, der die Elastizität des verjüngten Abschnitts 1.2 erhöht. Die Spreizung erfolgt dadurch nahe nur im Bereich des Teilabschnitts 1.3.

Eine Variante der in Figur 7 dargestellten Ausführungsform zeigt die Figur 8. Dabei unterscheidet sich diese Variante von der in Figur 7 gezeigten dadurch, dass der Teilabschnitt 1.3 des Einschubteils 1 an seinem freien Ende um einen zweiten verjüngten Abschnitt 1.4 ergänzt ist. Der mindestens eine Schlitz 1b wird bis in diesen verjüngten Abschnitt 1.4 geführt und endet in einem weiteren Materialschwächungsabschnitt 1b.2. Wird nun das Verbindungselement 2 in das Einsatzteil 1 eingeschoben, so wird der Bereich des Teilabschnitts 1.3 nach außen gedrängt, wodurch das Einsatzteil 1 in der Aufnahme 13 festgeklemmt wird. Dabei wird der Fixierelementträgerabschnitt 1.1 nicht durch die auftretenden Verdrängungskräfte verzerrt, so dass eine Bedienung des Fixierelements 3 durch unerwünschte Verzerrungen des Fixierelementträgerabschnitts 1.1 nicht beeinträchtigt wird.

Eine erfindungsgemäße Möbelverbindungsanordnung ist so ausgelegt, dass sie, insbesondere das Einsatzteil 1, leicht montiert werden kann und der für die Funktion notwendige feste Sitz bei der Fixierung des Verbindungselements 2 in dem Einschubteil 1 erzeugt wird, indem dabei Teile des Einsatzteils 1 nach außen gedrängt werden und so das Einsatzteil 1 in der Aufnahme 13 und damit am ersten Möbelteil 10 fixiert wird. Nach dem Lösen der Möbelverbindung, wenn das Verbindungselement 2 und das Einsatzteil 1 wieder getrennt sind, kann, fall es gewünscht oder erforderlich ist, das Einsatzteil 1 wieder leicht aus der Aufnahme 13 entfernt werden.

## Patentansprüche

1. Möbelteilverbindungsanordnung mit einem ersten Möbelteil (10) und einem damit verbundenen zweiten Möbelteil (30), wobei ein am zweiten Möbelteil (30) befestigtes Verbindungselement (2) vorgesehen ist, welches in ein in einer ersten Seite (12) des ersten Möbelteils (10) vorgesehenes Loch (1a) in einer Einschubrichtung (X) eingeschoben und darin mittels eines im ersten Möbelteil (10) vorgesehenen Fixierelements (3) gesichert ist, wobei in der ersten Seite (12) des ersten Möbelteils (10) eine Aufnahme (13) zur Aufnahme eines Einsatzteils (1) vorgesehen ist, in welche das Einsatzteil (1) eingebracht ist, wobei das Einsatzteil (1) das Loch (1a) aufweist und das Fixierelement (3) aufnimmt,
wobei das Einsatzteil (1) so ausgebildet ist, dass es beim Einschieben des Verbindungselements (2) in das Loch (1a) und/oder beim Fixieren des Verbindungselements (2) mit dem Fixierelement radial ausgedehnt (1f) oder gespreizt (1e) oder wenigstens ein, insbesondere als Lasche ausgebildeter, Abschnitt (1i) des Einsatzteils (1) aus diesem ausgestellt wird,
wobei das Einsatzteil (1) einen Schlitz (1b) umfasst und das Loch (1a) sich in Einschubrichtung (X) verjüngt, wobei das Verbindungselement (2) einen verjüngenden Spreizabschnitt (2c) umfasst, der beim Einstecken des Verbindungselement (2) in das Loch (1a) das Einsatzteil (1) im Bereich des Schlitzes (1b) spreizt, **dadurch gekennzeichnet, dass** das Einsatzteil (1) vollständig in die Aufnahme (13) eingebracht und bündig mit der ersten Seite (12) angeordnet ist.

2. Möbelteilverbindungsanordnung nach Anspruch 1,
**dadurch gekennzeichnet,**
**dass** das Loch (1a) sich in Einschubrichtung (X) konisch verjüngt, wobei das Verbindungselement (2) einen entgegen der Einschubrichtung (X), insbesondere konisch, verjüngenden Spreizabschnitt (2c) umfasst.

3. Möbelteilverbindungsanordnung nach Anspruch 1,
**dadurch gekennzeichnet,**
**dass** das Verbindungselement (2) einen sich in Einschubrichtung (X) konisch verjüngenden Spreizabschnitt umfasst.

4. Möbelteilverbindungsanordnung nach einem der vorigen Ansprüche,
**dadurch gekennzeichnet,**
**dass** der Schlitz (1b) wenigstens an einem Ende in einem gegenüber dem Schlitz (1b) verbreiterten Materialschwächungsabschnitt (1b.1, 1b.2) endet oder/und der Schlitz (1b) im Wesentlichen in einem Teilabschnitt (1.3) des Einsatzteils (1) verläuft, wobei der Schlitz (1b) an wenigstens einem Ende in einem radial zur Einschubrichtung (X) gegenüber dem Teilabschnitt (1.3) verjüngten Abschnitt (1.2, 1.4) endet.

5. Möbelteilverbindungsanordnung nach Anspruch 1, 2 oder 3, **dadurch gekennzeichnet,**
**dass** die Aufnahme (13) einen kreiszylindrischen Querschnitt aufweist und das Einsatzteil (1) eine kreiszylindrische Hüllfläche aufweist, so dass es in der Aufnahme drehbar ist.

6. Möbelteilverbindungsanordnung nach einem der vorigen Ansprüche,
**dadurch gekennzeichnet,**
**dass** das Einsatzteil (2) im Wesentlichen aus einem Kunststoff gebildet ist und/oder als Kunststoff/Metall-Hybridbauteil ausgebildet ist.

7. Möbelteilverbindungsanordnung nach einem der vorigen Ansprüche,
**dadurch gekennzeichnet,**
**dass** das Fixierelement (3) ein um eine Achse senkrecht zur Einschubrichtung (X) drehbares Fixierelement ist.

8. Möbelteilverbindungsanordnung nach einem der vorigen Ansprüche,
**dadurch gekennzeichnet,**
**dass** das Verbindungselement (2) ein stift- oder bolzenartiges Element ist, dessen dem ersten Möbelteil zugewandtes Ende einen verbreiterten Kopfabschnitt (2a) aufweist, der einen Abschnitt des Fixierelements (3) hintergreift.

9. Möbelteilverbindungsanordnung nach einem der vorigen Ansprüche,
**dadurch gekennzeichnet,**
**dass** das erste Möbelteil (10) eine an die erste Seite (12) angrenzende zweite Seite (11) aufweist, in der wenigstens ein Zugangsloch (14) vorgesehen ist, welches so angeordnet ist, dass das Fixierelement (2) durch das Zugangsloch (14) hindurch betätigt werden kann.

10. Möbelteilverbindungsanordnung nach Anspruch 6,
**dadurch gekennzeichnet,**
**dass** das Zugangsloch (14) eine Bohrung ist, deren Axialrichtung (Y, Z) senkrecht zur Einschubrichtung (X) liegt.

11. Möbelteilverbindungsanordnung nach einem der vorigen Ansprüche,
bei welcher das Fixierelement (3) als Exzenter und das Verbindungselement (2) als Einschraubdübel eines Exzenterbeschlages ausgebildet sind.

12. Möbelteilverbindungsanordnung nach Anspruch 10,
**dadurch gekennzeichnet,**
**dass** der Exzenter eine im Querschnitt nicht kreisrunde Hüllfläche aufweist, so dass er beim Drehen eine, insbesondere radial, nach außen gerichtete Kraft auf das Einsatzteil (1) ausübt.

13. Möbelteilverbindungsanordnung nach Anspruch 10,
**dadurch gekennzeichnet,**
**dass** das Einsatzteil (1) eine Aufnahmevertiefung (1c), mit insbesondere kreisförmigem Querschnitt, aufweist, in welche das Fixierelement (3) eingesetzt ist, wobei die Aufnahmevertiefung (1c) eine Innenwand aufweist, an welcher wenigstens ein Vorsprung (1g) so angeordnet ist, dass dieser beim Drehen des Fixierelements (3) von diesem überfahren und, insbesondere radial, nach außen verdrängt wird.

14. Möbelteilverbindungsanordnung nach einem der vorigen Ansprüche,
**dadurch gekennzeichnet,**
**dass** das Fixierelement (3) zum Fixieren eine Werkzeugaufnahme mit Kreuzschlitz- oder Innensechskantform aufweist.

15. Möbelteilverbindungsanordnung nach einem der vorigen Ansprüche,
**dadurch gekennzeichnet,**
**dass** die erste Seite (12) und/oder die zweite Seite (11) eine Schmalseite einer Möbelplatte ist.

16. Möbelverbindungsanordnung nach einem der vorigen Ansprüche,
**dadurch gekennzeichnet,**
**dass** das Einsatzteil (1) an seiner nach Einschieben in die Aufnahme (13) nach außen weisenden Stirnseite eine Drehlagenmarkierung, insbesondere schlitzartige Vertiefung, aufweist.

17. Möbelverbindungsanordnung nach einem der vorigen Ansprüche,
**dadurch gekennzeichnet,**
**dass** das Einsatzteil (1) an seiner Außenseite wenigstens eine oder eine Mehrzahl über seine Längserstreckung beabstandete, sich in Umfangsrichtung des Einsatzteils (1) erstreckende, insbesondere kreisbogenförmige, Rippe(n) (1d) oder Kralle(n) aufweist.

18. Möbelverbindungsanordnung nach Anspruch 16,
**dadurch gekennzeichnet,**
**dass** die Rippe(n) (1d) in Einschubrichtung (X) schräg verlaufende Flanken aufweist/aufweisen.

## Claims

1. Furniture part connection arrangement with a first furniture part (10) and a second furniture part (30) connected thereto wherein a connection element (2) fastened on the second furniture part (30) is provided which is inserted in an insert direction (X) into a hole (1a) provided in a first side (12) of the first furniture part (10) and is secured therein by means of a fixing element (3) provided in the first furniture part (10), wherein a receptacle (13) is provided in the first side (12) of the first furniture part (10) for receiving an insert part (1), wherein the insert part (1) is introduced into the receptacle, the insert part (1) having the hole (1a) and receiving the fixing element (3), wherein the insert part (1) is configured so that on sliding the connection element (2) into the hole (1a) and/or on fixing the connection element (2) with the fixing element the insert part is radially expanded (1f) or widened (1e) or at least one portion (1i), formed in particular as a tab, of the insert part (1) is made out from the latter, wherein the insert part (1) comprises a slot (1b) and the hole (1a) tapers in the insert direction (X), wherein the connection element (2) comprises a tapering expanding portion (2c) which, when the connection element (2) is inserted into the hole (1a), spreads out the insert part (1) in the region of the slot (1b), **characterised in that** the insert part (1) is introduced completely into the receptacle (13) and is arranged flush with the first side (12).

2. Furniture part connection arrangement according to claim 1, **characterised in that** the hole (1a) tapers conically in the insert direction (X), wherein the connection element (2) comprises an expanding portion (2c) tapering, in particular conically, counter to the insert direction (X).

3. Furniture part connection arrangement according to claim 1 **characterised in that** the connection element (2) comprises an expanding portion tapering conically in the insert direction (X).

4. Furniture part connection arrangement according to one of the preceding claims **characterised in that** the slot (1b) ends at at least one end in a materially weakened portion (1b.1, 1b.2) which is wider than the slot (1b), and/or the slot (1b) runs substantially in a sub-portion (1.3) of the insert part (1), wherein the slot (1b) ends at at least one end in a portion (1.2, 1.4) tapered radially toward the insert direction (X) opposite the sub-portion (1.3).

5. Furniture part connection arrangement according to claim 1, 2 or 3 **characterised in that** the receptacle (13) has a circular cylindrical cross-section and the insert part (1) has a circular cylindrical enveloping face so that it is able to rotate in the socket.

6. Furniture part connection arrangement according to one of the preceding claims **characterised in that** the insert part (2) is formed substantially from a plastic and/or is configured as a plastic/metal hybrid component.

7. Furniture part connection arrangement according to one of the preceding claims **characterised in that** the fixing element (3) is a fixing element capable of rotating about an axis perpendicular to the insert direction (X).

8. Furniture part connection arrangement according to one of the preceding claims **characterised in that** the connection element (2) is a pin-like or bolt-like element of which its end facing the first furniture part has a widened head portion (2a) which engages behind a portion of the fixing element (3).

9. Furniture part connection arrangement according to one of the preceding claims **characterised in that** the first furniture part (10) has a second side (11) adjoining the first side (12) and in which at least one access hole (14) is provided which is arranged so that the fixing element (2) can be actuated through the access hole (14).

10. Furniture part connection arrangement according to claim 6 **characterised in that** the access hole (14) is a bore whose axial direction (Y, Z) is perpendicular to the insert direction (X).

11. Furniture part connection arrangement according to one of the preceding claims wherein the fixing element (3) is configured as an eccentric, and the connection element (2) is configured as a screw-in dowel of an eccentric fitment.

12. Furniture part connection arrangement according to claim 10 **characterised in that** the eccentric has an enveloping face of a non-circular cross section so that during rotation it exerts an, in particular radially, outwardly directed force on the insert part (1).

13. Furniture part connection arrangement according to claim 10 **characterised in that** the insert part (1) has a receiving depression (1c), with an in particular circular-shaped cross section, in which the fixing element (3) is inserted wherein the receiving depression (1c) has an inner wall on which at least one protrusion (1g) is arranged so that when the fixing element (3) is rotated it travels over the protrusion which is forced, in particular radially, outwards.

14. Furniture part connection arrangement according to one of the preceding claims **characterised in that** the fixing element (3) for fixing purposes has a tool receptacle with a crossed-slot or internal hexagonal shape.

15. Furniture part connection arrangement according to one of the preceding claims **characterised in that** the first side (12) and/or the second side (11) is a narrow side of a furniture plate.

16. Furniture connection arrangement according to one of the preceding claims **characterised in that** the insert part (1) has on its end side which faces outwards after insertion into the receptacle (13) a rotary position marking, in particular a slot-like recess.

17. Furniture connection arrangement according to one of the preceding claims **characterised in that** the insert part (1) has on its outer side at least one, or a plurality of, in particular circular arc shaped, ribs (1d) or claws which are spaced out over its longitudinal extent and which extend in the circumferential direction of the insert part (1).

18. Furniture connection arrangement according to claim 16 **characterised in that** the rib or ribs (1d) has/have flanks running obliquely in the insert direction (X).

## Revendications

1. Système de raccordement d'un élément de meuble avec un premier élément de meuble (10) et un second élément de meuble (30), relié au premier élément de meuble, dans lequel un élément de liaison (2), fixé au second élément de meuble (30), est prévu, lequel est inséré dans un trou (1a), prévu dans un premier côté (12) du premier élément de meuble (10), dans une direction d'insertion (X) et y est bloqué au moyen d'un élément de fixation (3), prévu dans le premier élément de meuble (10), dans lequel un logement (13) pour recevoir une pièce d'insertion (1) est prévu dans le premier côté du premier élément de meuble (10), dans lequel la pièce d'insertion (1) est introduite, dans lequel la pièce d'insertion (1) comporte le trou (1a) et reçoit l'élément de fixation (3),
dans lequel la pièce d'insertion (1) est conçu de manière à ce que, lors de l'insertion de l'élément de liaison (2) dans le trou (1a) et / ou lors de la fixation de l'élément de liaison (2) avec l'élément de fixation (3), elle soit étendue radialement (1f) ou écartée (1e), ou au moins une section (1i) de la pièce d'insertion (1), surtout réalisée sous la forme d'une patte, soit exposée de celle-ci,
dans lequel la pièce d'insertion (1) comporte une fente (1b), et le trou (1a) se rétrécit dans la direction d'insertion (X), dans lequel l'élément de liaison (2) comporte une section d'expansion rétrécissante (2c), qui écarte la pièce d'insertion (1) dans la zone de la fente (1b) lors de l'insertion de l'élément de liaison (2) dans le trou (1a),
**caractérisé en ce**
**que** la pièce d'insertion (1) est introduite complètement dans le logement (13), et est agencée à fleur du premier côté (12).

2. Système de raccordement d'un élément de meuble selon la revendication 1,
**caractérisé en ce**
**que** le trou (1a) se rétrécit de manière conique dans la direction d'insertion (X), dans lequel l'élément de liaison (2) comporte une section d'expansion se rétrécissant, surtout coniquement (2c), à l'encontre de la direction d'insertion (X).

3. Système de raccordement d'un élément de meuble selon la revendication 1,
**caractérisé en ce**
**que** l'élément de liaison (2) comporte une section d'expansion se rétrécissant coniquement (2c) dans la direction d'insertion (X).

4. Système de raccordement d'un élément de meuble selon l'une quelconque des revendications précédentes,
**caractérisé en ce**
**que** la fente (1b) se termine, au moins à une extrémité, par une section d'affaiblissement du matériau (1b.1, 1b.2), élargie par rapport à la fente, ou / et la fente (1b) s'étend surtout dans une section partielle (1.3) de la pièce d'insertion (1), dans laquelle la fente (1b) se termine à au moins une extrémité dans une section rétrécie (1.2, 1.4) par rapport à la section partielle (1.3) et radialement par rapport à la direction d'insertion (X).

5. Système de raccordement d'un élément de meuble selon la revendication 1, 2 ou 3,
**caractérisé en ce**
**que** le logement (13) comporte une section cylindrique circulaire et la pièce d'insertion (1) comporte une surface enveloppe cylindrique circulaire, de sorte qu'elle puisse tourner dans le logement.

6. Système de raccordement d'un élément de meuble selon l'une quelconque des revendications précédentes,
**caractérisé en ce**
**que** la pièce d'insertion (2) est surtout est formée d'une matière plastique et / ou est conçue comme une pièce hybride plastique/métal.

7. Système de raccordement d'un élément de meuble selon l'une quelconque des revendications précédentes,
**caractérisé en ce**
**que** l'élément de fixation (3) est un élément de fixation pouvant tourner autour d'un axe perpendiculaire à la direction d'insertion (X).

8. Système de raccordement d'un élément de meuble selon l'une quelconque des revendications précédentes,
**caractérisé en ce**
**que** l'élément de liaison (2) est un élément en forme de tige ou de boulon, dont l'extrémité, tournée vers le premier élément de meuble, présente une section de tête élargie (2a), qui s'engage derrière une section de l'élément de fixation (3).

9. Système de raccordement d'un élément de meuble selon l'une quelconque des revendications précédentes,
**caractérisé en ce**
**que** le premier élément de meuble (10) comporte un second côté (11), adjacent au premier côté (12), dans lequel au moins un trou d'accès (14) est prévu, qui est agencé de telle sorte, que l'élément de fixation (2) peut être actionné à travers le trou d'accès (14).

10. Système de raccordement d'un élément de meuble selon la revendication 6,
**caractérisé en ce**
**que** le trou d'accès (14) est un alésage, dont la direction axiale (Y, Z) est perpendiculaire à la direction d'insertion (X).

11. Système de raccordement d'un élément de meuble selon l'une
quelconque des revendications précédentes,
dans lequel l'élément de fixation (3) est conçu comme un excentrique, et l'élément de liaison (2) comme une cheville à visser d'une ferrure à excentrique.

12. Système de raccordement d'un élément de meuble selon la revendication 10,
**caractérisé en ce**
**que** l'excentrique comporte une surface d'enveloppe de section non circulaire, de sorte que, lors de sa rotation, il exerce une force, surtout dirigée radialement vers l'extérieur, sur la pièce d'insertion (1).

13. Système de raccordement d'un élément de meuble selon la revendication 10,
**caractérisé en ce**
**que** la pièce d'insertion (1) comporte un évidement formant logement (1c) avec une section transversale notamment circulaire, dans lequel l'élément de fixation (3) est inséré, dans lequel l'évidement formant logement (1c) comporte une paroi intérieure, sur laquelle au moins une saillie (1g) est agencée de telle sorte que, lors de la rotation de l'élément de fixation (3), celui-ci la dépasse et est déplacée surtout radialement vers l'extérieur.

14. Système de raccordement d'un élément de meuble selon l'une quelconque des revendications précédentes,
**caractérisé en ce**
**que** l'élément de fixation (3) comporte un porte-outil de forme cruciforme ou à six pans creux pour la fixation.

15. Système de raccordement d'un élément de meuble selon l'une quelconque des revendications précédentes,
**caractérisé en ce**
**que** le premier côté (12) et / ou le second côté (11) est un petit côté d'une plaque de meuble.

16. Système de raccordement de meuble selon l'une quelconque des revendications précédentes,
**caractérisé en ce**
**que** la pièce d'insertion (1) présente un marquage de position de rotation, surtout un renfoncement en forme de fente, sur sa face frontale orientée vers l'extérieur après l'insertion dans le logement (13).

17. Système de raccordement de meuble selon l'une quelconque des revendications précédentes,
**caractérisé en ce**
**que** la pièce d'insertion (1) présente sur son côté extérieur au moins une ou une pluralité de nervure(s) (1d) ou griffe(s), espacées sur son extension longitudinale, et s'étendant dans la direction périphérique de la pièce d'insertion (1), surtout en forme d'arc de cercle.

18. Système de raccordement de meuble selon la revendication 16, **caractérisé en ce**
**que** la (les) nervure(s) (1d) présente(nt) des flancs inclinés dans la direction d'insertion (X).
